# EUROPEAN PATENT APPLICATION

(11) **EP 1 909 337 A1**
(43) Date of publication of application: **09.04.2008**
(21) Application number: 06781548.0
(22) Date of filing: 25.07.2006
(51) Int. Cl.: H01L 33/00, G01D 7/00, G02F 1/13, G02F 1/133, G09F 9/00

(54) **DISPLAY DEVICE AND SENSOR WITH THE SAME**

(30) Priority: 25.07.2005 JP 2005214484
(71) Applicant: Sunx Limited, Kasugai-shi, Aichi 486-0901 (JP)
(72) Inventor: OCHIAI, Takayuki, SUNX LIMITED, Kasugai-shi Aichi 4860901 (JP)
(74) Representative: Müller-Boré & Partner Patentanwälte
(86) International application number: PCT/JP2006/314636
(87) International publication number: WO 2007/013435

(57) **Abstract**

A display device 1 includes a first display 10 and a second display 20. The first display 10 includes first display light sections 11, 12 and second displays 13, 14 connected in parallel with each other, and a switch controller 30 for switching first switches Tr11, Tr12 and second switches Tr21, Tr22. The first switches Tr11, Tr12 each connected in series to the respective first display light sources 11, 12 and the second switches Tr21, Tr22 each connected in series to the second display light sources 13, 14 are connected in parallel. The second display 20 includes a display light source for the second display 21, 22. The display light source for the second display 21, 22 is connected in series to current paths L1, L3 connected to the first switches Tr11, Tr12 and the second switches Tr21, Tr22.

## Description

The present invention relates to a display device and a detection sensor having the display device.

One example of a known method for lighting a plurality of LED as a display light source with reduced power consumption (Patent Document 1). The method discloses two LEDs connected in series, a constant current source between the two LEDs, and switches each connected in parallel with the respective LEDs. Using the method, the power consumption can be reduced in comparison with a case where two LEDs are connected in parallel and turned on as shown in Fig. 2 of the Patent Document 1.

On the other hand, an operator of a detection sensor such as a pressure sensor or the like needs to exactly know the detected conditions, and for this purpose, the detection sensor is required to show much information such as a detected pressure and the like. In order to show much information, it is preferable that such a detection sensor be provided with a plurality of displays.
[Patent Document 1] Japanese Unexamined Utility Model Application Publication No. 7-42968

However, such a detection sensor provided with a plurality of displays and respective current paths for the displays each, have to be provided with respective switches (e.g. transistors) for the display light sources in each of the current paths. The number of the parts such as the switches and the like thus have to be increased. Furthermore, in such a detection sensor having respective current paths for the displays each to provide the plurality of displays, it is necessary to supply current to each of the current paths, and thus power consumption has to be increased.

The present invention was proposed in accordance with the circumstances as described above, and its object is to provide a display device having a plurality of displays while preventing increase of the number of the parts and power consumption, as well as to provide a detection sensor having the display device.

A display device in accordance with the present invention has a first display for displaying a first information and a second display for displaying a second information, and the second information is different from the first information. The display device includes a first display light source and a second display light source. Both of the first display light source and the second display light source are provided in the first display. The first display light source and the second display light source are connected in parallel with each other, and each of the first display light source and the second display light source has a wavelength different from each other. The display device also includes a switch controller for switching a first switch and a second switch. The first switch is for driving the first display light source and a second switch is for driving the second display light source. The first switch is connected in series to the first display light source and the second switch is connected in series to the second display light source, and the first switch and the second switch are connected in parallel. The display device also includes a display light source for the second display provided in the second display. The display light source for the second display is connected in series to a current path connected to the first switch and the second switch.

Also, a preferable aspect may be that the switch controller selectively executes a first switch control, a second switch control, and a third switch control. The first switch control is for switching the first switch thereby pulse lighting the first display light source. The second switch control is for switching the second switch thereby pulse lighting the second display light source. The third switch control is for switching the first and second switches thereby pulse lighting the first and second display light sources. The switch controller changes pulse duties of the first and second display light sources such that a sum of the currents flowing through the display light source for the second display be constant in a case of executing the third switch control.

Also, another preferable aspect may be that the first display includes a liquid crystal panel having the first and second display light sources on the backside opposite from the display side thereof, and the second display includes a liquid crystal panel has the display light source for the second display on the backside opposite from the display side thereof.

Also, the preferable aspect may be that the display light source for the second display includes a third display light source and a fourth display light source, and the third display light source and the fourth display light source have a different wavelength from each other. A third switch is connected in series to the third display light source and a fourth switch is connected in series to the fourth display light source. The third switch and the fourth switch are connected in parallel.

Also, the display device can be included in a detection sensor that detects a condition of a detecting object and displays the condition in the first display. In this case, the detection sensor can include a detector for outputting a detection signal corresponding to the detected condition of the detecting object, a setting means for setting a threshold value to be compared with the value of the detection signal, a determining means for comparing the value of the detection signal with the threshold value, thereby determining the condition of the detecting object, and a display controller for controlling so as to turn on the first or second display light source, thereby presenting the value of the detection signal in the first display in different colors each in a case where the value of the detection signal exceeds the threshold value and in the case where the value of the detection signal does not exceed the threshold value.

In accordance with the present invention, the display light source for the second display is connected in series to the current path connected.to the first switch and the second switch. Accordingly, any switch for the display light source for the second display is unnecessary, and increase of the parts can be prevented. Also, current can be supplied to the display light source for the second display without any current path other than the current path for the first display. Accordingly, a plurality of displays (the first display and the second display) can be provided without supplying current to additional current paths and therefore without increasing power consumption.

Fig. 1 is a circuit diagram of a display device in accordance with a first embodiment of the present invention;
Fig. 2 is a timing chart of the display device;
Fig. 3 is a perspective view of a detection sensor having the display device;
Fig. 4 is a block diagram showing an electric construction of the display device;
Fig. 5 is a flow chart in a turning on processing for green and red LED chips in a first display in a measuring mode;
Fig. 6 is a circuit diagram of a display device in accordance with a second embodiment; and
Fig. 7 is a circuit diagram of a display device in accordance with another embodiment.

### Explanation of Symbols

1, 1A, 1B ... a display device
10 ... a first display
11 ... a first red light section in the first display (a first display light source)
12 ... a second red light section in the first display (the first display light source)
13 ... a first green light section in the first display (a second display light source)
14 ... a second green light section in the first display (the second display light source)
16 ... a first LCD panel
20, 20A.. a second display
21 ... a first green light section in the second display (a display light source for the second display, a third display light source) 22 ... a second green light section in the second display (the display light source for the second display, the third display light source) 23 ... a first red light section in the second display (the display light source for the second display, a fourth display light source) 24 ... a second red light section in the second display (the display light source for the second display, the fourth display light source) 26 ... a second LCD panel
30, 30A... a CPU (a switch controller, a determining device, a display controller)
61 ... a pressure detector section (a detector)
81 ... a reference pressure value setting switch
P5, P7 ... an input port (a third switch)
P6, P8 ... an input port (a fourth switch)
Tr11, Tr12 ... a transistor (a first switch)
Tr21, Tr22 ... a transistor (a second switch)

### First Embodiment

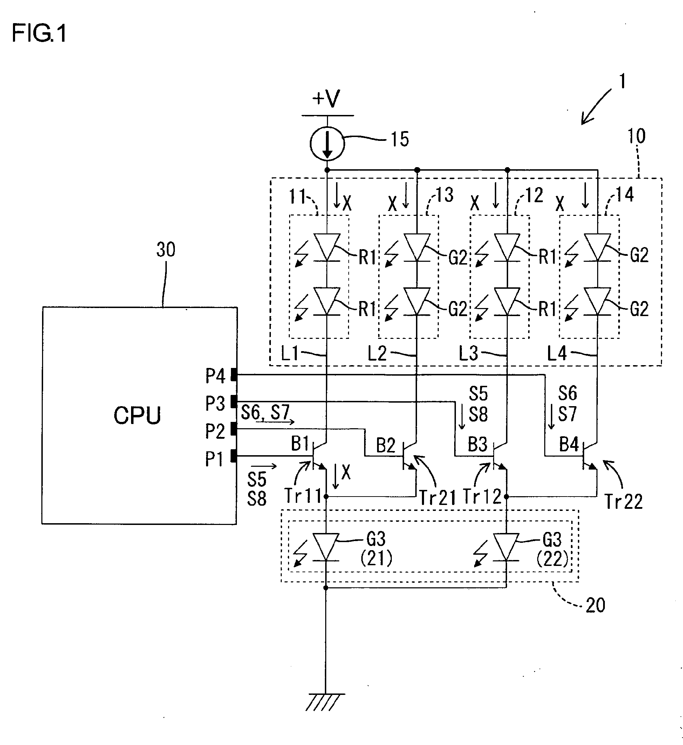

A display device 1 and a detection sensor 50 having the device 1 in accordance with the present invention will be explained with reference to Figs. 1 through 5.

### 1. Construction of the Display Device

Fig. 1 shows an electric construction of the display device 1 in accordance with the first embodiment. The display device 1, as shown in the figure, includes a first display 10, a second display 20, and a CPU 30.

The first display 10, as shown in the figure, includes a first red light section 11, a second red light section 12, a first green light section 13, and a second green light section 14. Each of the first red light section 11 and the second red light section 12 has two red LED chips R1 connected in series therein, and each of the first green light section 13 and the second green light section 14 has two green LED chips G2 connected in series therein. The light sections 11 through 14 each are, as shown in the figure, connected in parallel and connected via the constant current source 15 to a power supply line. Note that the first and second red light sections 11, 12 correspond to a first display light source, and the first and second green light sections 13, 14 correspond to a second display light source.

The CPU 30, as shown in the figure, includes output ports P1-P4. The output ports P1-P4 are connected to transistors Tr11, Tr12, TR21, and Tr22, respectively. The transistors Tr11, Tr12, Tr21, Tr22 each are connected in series to the first red light section 11, the second red light section 12, the first green light section 13, and the second green light section 14, respectively. The adjacent transistors Tr11, Tr21 have a common-emitter connection and are connected in parallel. The adjacent transistors Tr12, Tr22 also have a common-emitter connection and are connected in parallel. When the CPU 30 outputs actuating signals of Level H from the output ports P1-P4, the transistors Tr11, Tr12 and the transistors Tr21, Tr22 are turned to the ON state. On the other hand, when the CPU 30 outputs actuating signals of Level L from the output ports P1-P4, the transistors Tr11, Tr12 and the transistors Tr21, Tr22 are turned to the OFF state. Note that the transistors Tr11, Tr12, the transistors Tr21, Tr22, and the CPU30 correspond to a first switch, a second switch, and a switch controller, respectively.

The second display 20, as shown in the figure, includes a green LED chip G3 constituting a first green light section 21 and a green LED chip G3 constituting a second green light section 22. The first green light section 21 is connected to the downstream of the common-emitter connection of the transistors Tr11, Tr21 in the current flow direction X. The second green light section 22 is connected to the downstream of the common-emitter connection of the transistors Tr12, Tr22 in the current flow direction X. The first green light section 21 and the second green light section 22 are connected in parallel at the downstream thereof in the current flow direction X, and grounded. Note that the first and second green light sections 21, 22 correspond to a display light source for the second display.

### 2. Operation of the Display Device

In the display device 1, in a case of turning on the first and second red light sections 11, 12 and the first and second green light sections 13, 14 in the first display 10 and the first and second green light sections 21, 22 in the second display 20, the CPU 30 outputs the actuating signals of level H to bases B1-B4 of the transistors Tr11, Tr12, Tr21, Tr22 each connected to the respective output ports P1-P4. The actuating signals of Level H are input to the bases B1-B4, thereby turning the transistors Tr11 and the like to the ON state.

The transistor Tr11 is connected in series to a first current path L1, and the first green light section 21 is connected to the first current path L1. When the transistor Tr11 is turned to the ON state, current flows in the direction X through the constant current source 15, the first red light section 11, the transistor Tr11, and the first green light section 21. The transistor Tr21 is connected in series to a second current path L2. When the transistor Tr21 is turned to the ON state, current flows in the direction X through the constant current source 15, the first green light section 13, the transistor Tr21, and the first green light section 21.

The transistor Tr12 is connected in series to a third current path L3, and the second green light section 22 is connected to the third current path L3. When the transistor Tr12 is turned to the ON state, current flows in the direction X through the constant current source 15, the second green light section 12, the transistor Tr12, the second green light section 22, and the current path L1. The transistor Tr22 is connected in series to a fourth current path L4. When the transistor Tr22 is turned to the ON state, current flows in the direction X through the constant current source 15, the second green light section 14, the transistor Tr22, the second green light section 22, and the first current path L1.

When current flows through the current paths L1-L4, the first and second red light sections 11, 12, the first and second green light sections 13, 14, and the first and second green light sections 21, 22 are turned on. In the display device 1, the CPU 30 determines for each of the output ports P1-P4 whether or not to output the output signal of Level H, and based on the determination, turns on the red light sections 11, 12 or the green light sections 13, 14 in the first display 10 and the green light sections 21, 22 in the second display 20 (the first or second switching control of the present invention) or turns on the red light sections 11, 12 and the green light sections 13, 14 in the display 10 and the green light sections 21, 22 in the second display 20 (the third switching control of the present invention). As to be understood from Fig. 1, the green light sections 21, 22 in the second display 20 can be turned on by the current that flows through either one of the current paths L1 and L2 or either one of the current paths L3 and L4.

On the other hand, in the display device 1, in a case of turning off the red light sections 11, 12 and the green light sections 13, 14 in the first display, and the green light sections 21, 22 in the second display, the CPU 30 outputs the actuating signals of Level L to the bases B1-B4 of the transistors Tr11, Tr12, Tr21, and Tr22 each connected to the respective output ports P1-P4. The actuating signals of Level L are input to the bases B1-B4, thereby turning the transistors Tr11 and the like to the OFF state.

When the transistors Tr11 and the like each connected in series to the respective current paths L1-L4 are turned to the OFF state, current does not flow through the current paths L1-L4. Thus, the red light sections 11, 12, the green light sections 13, 14, and the green light sections 21, 22 are turned off. In the display device 1, the CPU 30 determines for each one of the output ports P1-P4 whether or not to output the output signals of Level L therefrom, and based on the determination, turns off the red light sections 11, 12 or the green light sections 13, 14 in the first display 10, and the green light sections 21, 22 in the second display 20 (the first or second switching control) or turns off the red light sections 11, 12 and the green light sections 13, 14 in the display 10, and the green light sections 21, 22 in the display 20 (the third switching control).

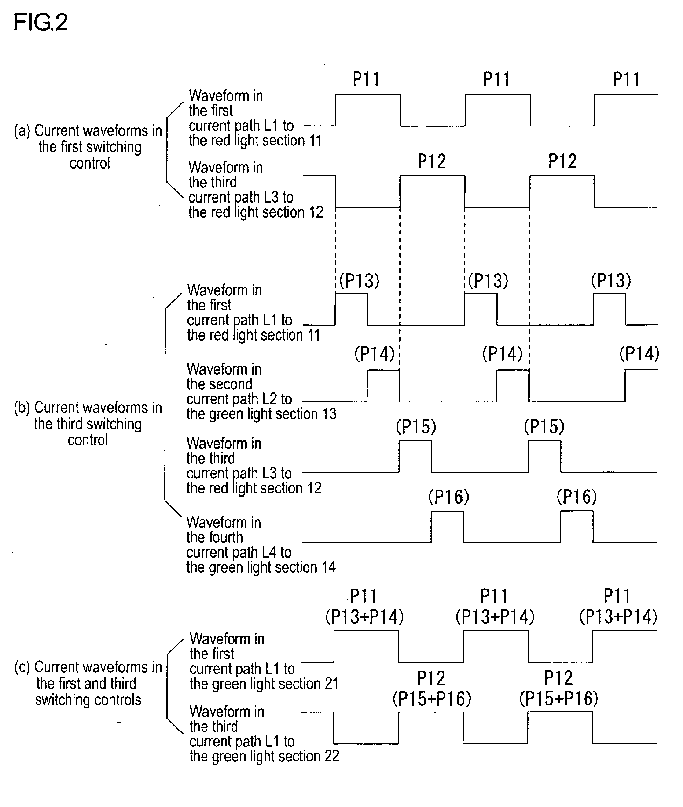

Fig. 2 is a timing chart illustratively showing the first and third switching controls executed by the CPU 30. In the first switching control, the transistors Tr11, Tr12 are supplied with the signals of Level H or L by the CPU30 and turned into ON-OFF state and, as shown in Fig. 2(a), pulse currents P11, P12 flow through the first current path L1 and the third current path L3, respectively. By the pulse currents P11, P12 flowing through the first and third current paths L1, L3, the red light sections 11, 12 each connected in series to the first and third current paths L1, L3 emits pulsed light. The first display 10 emits red light with the pulse lighting of the red light sections 11, 12.

As shown in Fig. 2(c), the pulse currents P11, P12, which flow through the first and third current paths L1, L3, further flow through the green light sections 21, 22 each connected in series to the downstream of the respective current paths L1, L3 in the current flow direction. The second display 20 emits green light with the pulse lighting of the green light sections 21, 22.

In the third switching control, the transistors Tr11, Tr12, Tr21, Tr22 are supplied with the actuating signals of Level H or L by the CPU 30 and turned to the ON-OFF state and, as shown in Fig. 2(b), the pulse currents P13-P16 each flow through the respective current paths L1-L4. By the pulse currents P13-P16 flowing through the current paths L1-L4, the red light sections 11, 12 and the green light sections 13, 14, each connected to the respective current paths L1-L4, emit pulsed light. The first display 10 emits yellow light produced by synthesis of the red color and the green color.

As shown in Fig. 2 (a) and (b), the CPU 30, in order to make the first display 10 emit the yellow colored light, operates an pulse-width modulation control (PWM control) for the actuating signal H or L so that the sum of the pulse currents P13, P14 be equal to the pulse current P11 of the case of the first switching control and so that the pulse duties of the pulse currents P13, P14 be equal to each other.

As shown in Fig. 2 (c), the pulse currents P13, P14 flowing through the first and second current paths L1, L2, flow through the first green section 21 connected to both of the first current path L1 and the second current path L2. The pulsed currents P13, P14, which has the same amount of the current with the pulsed current P11, turn on the first green light section 21. Thus, the second display 20 emits light of the same brilliance with the case of the first switching control.

As shown in the figure, the CPU 30 operates the PWM control, thereby making the sum of the pulse currents P15, P16 be equal to the pulse current P12 of the case of the first switching control, and making the pulse duties of the pulse currents P15, P16 be equal to each other. As shown in Fig. 2 (c), the pulse currents P15, P16, flowing through the third and fourth current paths L3, L4, flow through the second green light section 22 connected to both of the third current path L3 and the fourth current path L4. The pulse currents P15, P16, which have the same amount of the current as the pulse current P12, turn on the second green light section 22. Thus, the second display 20 emit light of same brilliance with the case of the fist switching control.

### 3. Construction of a Pressure Sensor

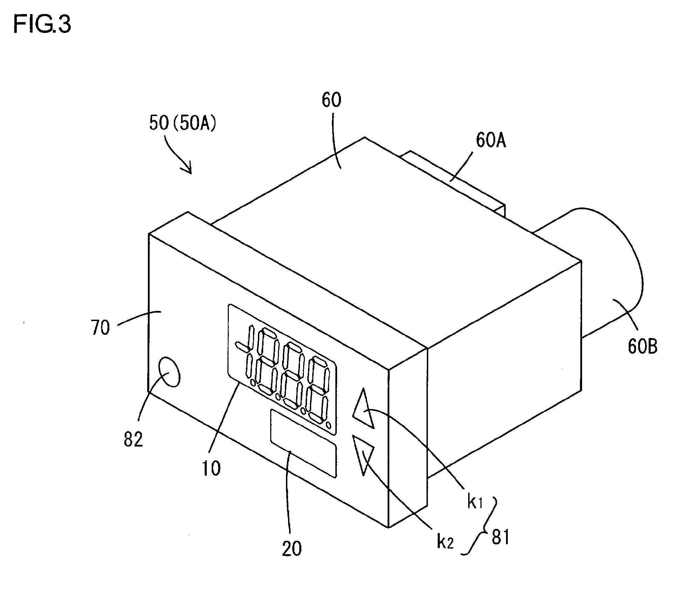

In the present embodiment, the detection sensor will be explained illustratively as is used in a pressure sensor 50. The pressure sensor 50 is used, for example, for measuring the degree of vacuum in a cavity when vacuum forming is performed. As shown in Fig. 3, the pressure sensor 50 includes a box-shaped sensor body 60. As shown in the figure, the pressure sensor 50 includes a front panel 70 in front of the sensor box 60 for indicating a reference pressure value (corresponding to a second information and a threshold value) and a measured result (corresponding to a first information) .

The pressure sensor 50 includes a power source connection 60A for being connected to a power supply line and a pressure introduction port 60B, both disposed on the backside thereof. The pressure introduction port 60B is connected to a tube (not illustrated) via a joint. In the pressure sensor 50, inner pressure in the cavity is introduced through the tube and the pressure introduction port 60B to the sensor body 60.

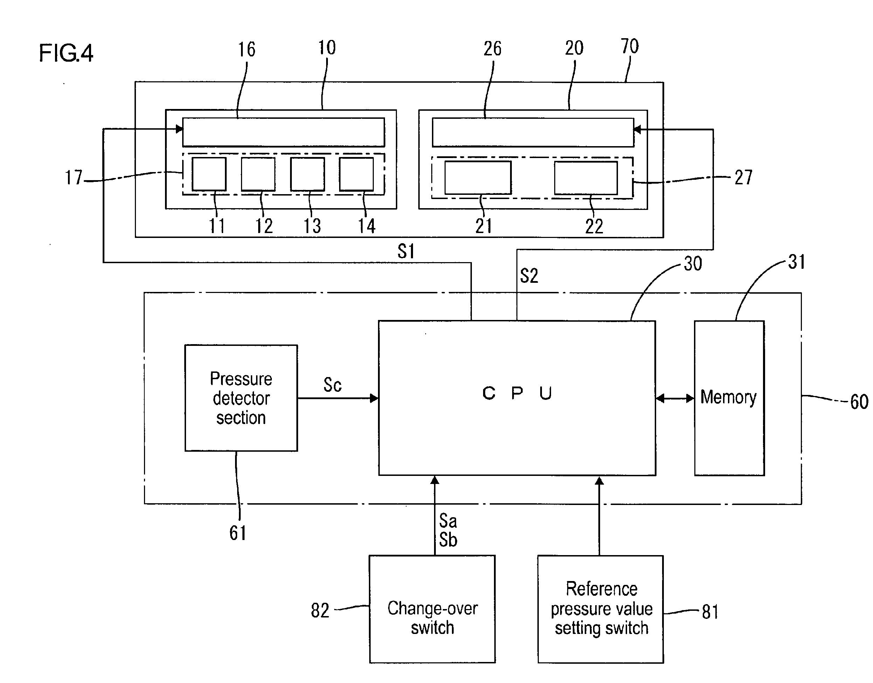

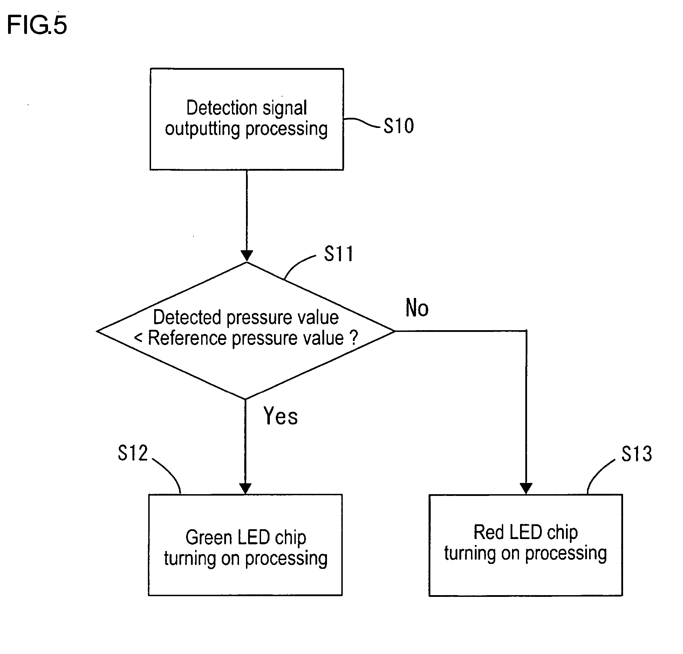

Figs. 4 and 5 show an electrical construction of the pressure sensor 50. A symbolic numeral 10 indicates the first display, a symbolic numeral 20 indicates the second display, a symbolic numeral 30 indicates the CPU (corresponding to a determining means and a display controller), a symbolic numeral 61 indicates a pressure detector section (corresponding to a detector), a symbolic numeral 81 indicates a reference pressure value setting switch (corresponding to a setting means), and a symbolic numeral 82 indicates a change-over switch.

The reference pressure value setting switch 81 is a switch for setting a reference pressure value (corresponding to a threshold value) before starting measurements. The reference pressure value setting switch 81, as shown in Fig. 3, includes a pair of up-down keys k1, k2, and disposed adjacent to the displays 10, 20. The reference pressure value is changed by pushing the up-down keys k1, k2 depending upon the measuring object.

When the reference pressure value is set with the reference pressure value setting switch 81, the reference pressure value is stored in a memory 31 via the CPU 30. In the present embodiment, the reference pressure value is set at X[Pa].

As shown in Fig. 3, the change-over switch 82 is disposed on the front panel 70 at the lower left side thereof. The change-over switch 82 (a change-over means) is arranged for changing over the mode from a setting mode for setting the reference pressure value (corresponding to a setting mode) to a measuring mode for measuring the pressure after setting the reference pressure value (corresponding to a detection mode), and vice versa. The change-over switch 82, when being changed over to the setting mode or to the measuring mode, outputs a setting mode change-over signal Sa or a measuring mode change-over signal Sb to the CPU30.

The pressure detector section 61 includes a pressure-sensitive element using a semiconductor diaphragm and is accommodated in the sensor body 60 together with the CPU30 and the memory 31. When the inner pressure in the cavity is introduced through the pressure introduction port 60B, the pressure detector section 61 outputs a detection signal Sc corresponding to the pressure value to the CPU 30.

As shown in Fig. 3, the first display 10 is provided on the front panel 70 in the center thereof. As shown in the figure, the second display 20 is provided on the front panel 70 below the first display 10. The first display 10, as shown in Fig. 4, includes a first LCD panel 16 (corresponding to a liquid crystal panel) having a liquid crystal layer between two polarizers thereof and a backlight 17 (corresponding to the first and second display light sources) disposed at the backside (the right far side in Fig. 3) of the first LCD panel 16. The second display 20, as shown in the figure, includes a second LCD panel 26 (corresponding to the liquid crystal panel) and a backlight 27 (corresponding to the display light source for the second display) disposed at the backside (the right far side in Fig. 3) of the second LCD panel 26.

The LCD panels 16, 26, are applied with control voltage across each of pixels divided into a plurality of sections, and passes or blocks the light emitted from the respective backlights 17, 27. In this case, the LCD panels 16, 26 passes the light through the sections for the displaying contents (the numeric character sections) while blocking at the other sections which do not pass the light therethrough.

In the measuring mode, the CPU 30, simultaneously with receiving the measuring mode change-over signal Sb, outputs a control signal S1 (as shown in Fig. 4). Based on the control signal S1, control voltage is applied to the first LCD panel 16. When current flows through the current paths L1 and the like and thereby turning on the backlight 17, the first LCD panel 16 presents the displaying contents (the measured pressure value in this case) with the light.

In the setting mode, the CPU 30, simultaneously with receiving the setting mode change-over signal Sa, outputs a control signal S2 (as shown in Fig. 4). Based on the control signal S2, control voltage is applied to the second LCD panel 26. When current flows through the current paths L1 and the like and thereby turning on the backlight 27, the second LCD panel 26 presents the displaying contents (the threshold value in this case) with the light.

### 4. Operation of the Pressure Sensor

In the pressure sensor 50, the change-over switch 82 outputs the setting mode change-over signal Sa or the measuring mode change-over signal Sb, and the CPU determines whether or not the setting mode change-over signal Sa or the measuring mode change-over signal Sb is received, thereby executing determination of the mode and executing a processing in compliance with the each mode. In the pressure sensor 50, in a case where the CPU receives the setting mode change-over signal Sa and determines that it is the setting mode, the CPU 30, based on the reference pressure value that is set by the reference pressure setting switch 81, outputs the control signal S2 to the second LCD panel 26. Thus, the second LCD panel 26 passes the light through the sections for the displaying contents (the numeric characters) while blocking at the other sections which do not pass the light therethrough. In the pressure sensor 50, the CPU 30, simultaneously with outputting the control signal S2, outputs the control signal S1 to the first LCD panel 16 based on the measured pressure value (0[Pa] in this case). Thus, the first LCD panel 16 also, similar to in the second LCD panel 26, passes the light through the section for the displaying contents (the numeric characters) while blocking at the other sections which do not pass the light to therethrough.

The CPU30, simultaneously with outputting the control signals S1, S2, outputs actuating signals S5, S7 of Level H (as shown in Fig. 1) from the output ports P1-P4 to the bases B1-B4 of the transistors Tr11, Tr12, Tr21, Tr22 each connected in series to the respective current paths L1-L4.

The actuating signals S5, S7 are input to the bases B1-B4, thereby turning the transistors Tr11, Tr12, Tr21, Tr22 to the ON state. When the transistor Tr11 and the like are turned to the ON state, current flows through the current paths L1-L4 each. The green light sections 21, 22 in the second display 20 are thus turned on.

The green light sections 21, 22 illuminate the second LCD panel 26 from the backside, and thus the second display 20 presents the displaying contents (the reference pressure value) with the green light. Note that, in the first display 10, the first LCD panel 16 receives the control signal S1, while current flows through the current paths L1-L4, thereby turning on the red light sections 11, 12 and the green light sections 13, 14. Thus, the first display 10 presents the displaying contents (a numeric character "0" in this case) with yellow light that is produced by synthesis of the red color and the green color.

On the other hand, in a case where the CPU receives the measuring mode change-over signal Sb and determines that it is the measuring mode, the pressure sensor 50 measures the inner pressure in the cavity with the pressure detector section 61. The pressure sensor 50, as shown in Fig. 5, executes a detection signal outputting processing (S10). In the detection signal outputting processing (S10), the pressure detector section 61 outputs the control signal Sc having a value in accordance with the measured pressure value to the CPU30. The CPU 30 outputs the control signal S1 based on the measured pressure value and the control signal S2 based on the displaying contents (characters "RUN" in this case) to the first display 10 and to the second display 20, respectively.

The CPU, while converting the received detection signal Sc into the measured pressure value, reads out the reference pressure value set in the setting mode from the memory 31. The CPU30, as shown in the figure, determines whether or not the measured pressure value is smaller than the reference pressure value read out from the memory 31 (S11).

In the S11, in a case where the measured pressure value is determined to be smaller than the reference pressure value (a case where a vacuum state is maintained), the CPU 30 executes a green LED chip turning on processing (S12) . In the green LED chip turning on processing (S12), the CPU 30, simultaneously with outputting the control signals S1, S2, outputs the actuating signals S7 of Level H (as shown in Fig. 1) from the output ports P2, P4 to the bases B2, B4 of the transistors Tr21, Tr22 each connected in series to the respective second and fourth current paths L2, L4, and an actuating signals S8 (see Fig. 1) of Level L from the output ports P1, P3 to the bases B1, B3 of the transistors Tr11, Tr12 each connected in series to the respective first and third current paths L1, L3.

The actuating signals S7 of Level H are input to the bases B2, B4, thereby turning the transistors Tr21, Tr22 to the ON state, and current flows through the second and fourth current paths L2, L4. Thus, the green light sections 13, 14 in the first display 10 are turned on. At the same time, the actuating signals S8 of Level L are input to the bases B1, B3, thereby turning the transistors Tr11, 12 to the OFF state, and current does not flow through the first and third current paths. Thus, the red light sections 11, 12 in the first display 10 are turned off.

By the green LED chip turning on processing (S12), the green light sections 13, 14 illuminate the first LCD panel 16 from the backside, and thus the first display 10 presents the displaying contents (the measured pressure value in this case) with the green light. Note that, in the second display 20, the second LCD panel 26 receives the control signal S2, while current flows through the green light sections 21, 22 connected in parallel to the second and fourth current paths L2, L4, thereby turning on the green light sections 21, 22. Thus, the second display 20 presents the displaying contents (the characters "RUN" in this case) with the light.

Furthermore, in the S11, in a case where the measured pressure value is determined to be larger than the reference pressure value (a case where the vacuum state is not maintained), the CPU 30 executes a red LED chip turning on processing (S13) . In the red LED chip turning on processing (S13), the CPU 30, simultaneously with outputting the control signals S1, S2, outputs the actuating signals S5 of Level H from the output ports P1, P3 to the bases B1, B3 of the transistors Tr11, Tr12 each connected in series to the respective first and third current paths L1, L3, and the actuating signals S6 of Level L from the output ports P2, P4 to the bases B2, B4 of the transistors Tr21, Tr22 each connected in series to the respective second and fourth current paths L2, L4.

The actuating signals S5 of Level H is input to the bases B1, B3, thereby turning the transistors Tr11, Tr12 to the ON state, and current flows through the first and third current paths L1, L3. Thus, the red light sections 11, 12 in the first display 10 are turned on. At the same time, the actuating signals S6 of Level L are input to the bases B2, B4, thereby turning the transistors Tr21, Tr22 to the OFF state, and current does not flow through the second and fourth current paths L2, L4. Thus, the green light sections 13, 14 in the first display 10 are turned off.

By the red LED chip turning on processing (S13), the red light sections 11, 12 illuminate the first LCD panel 16 from the backside, and thus the first display 10 presents the displaying contents (the measured pressure value in this case) with the red light. Note that, in the second display 20, the second LCD panel 21 receives the control signal S2, while current flows through the first and third current paths L1, L3, thereby turning on the green light sections 21, 22. Thus, the second display 20 presents the displaying contents (the characters "RUN" in this case) with the light.

### 5. Effects of the First Embodiment

In the display device 1 in accordance with the present embodiment, as shown in Fig. 1, the transistors Tr11, Tr12 each are connected in series to the respective red light sections 11, 12 in the first display 10, and the transistors Tr21, Tr22 each are connected in series to the respective green light sections 13, 14 in the first display 10. The transistors Tr11, Tr12, Tr21, Tr21 are connected to the first current path L1, and the third current path L3. The green light sections 21, 22 in the second display 20 each are connected in series to the downstream of the respective first current path L1 and the third current path L3 in the current flowing direction (the direction X). With this, it is unnecessary to provide any switch (transistors) for the green light sections 21, 22 in the second display 20, and increase of number of parts such as the transistors or the like can be prevented.

The display device 1 can supply current through the first and third current paths L1, L3 to each of the green light sections 21, 22 in the second display 20. Therefore, current can be supplied to each of the green light sections 21, 22 in the second display 20 without any current path other than the current paths L1, L3, and a plurality of displays (the first display 10, the second display 20) can be provided while preventing increase of power consumption associated with additional current paths to be supplied with current.

With the display device 1, as shown in Fig. 2, in the case of executing the third switching control, the sum of the pulse currents P13, P14 are configured so as to be equal to the pulse current P11 of the case of the first switching control, and the sum of the pulse currents of P15, P16 are configured so as to be equal to the pulse current P12 of the case of the first switching control. In the display device 1, furthermore, the pulse duties of the pulse currents P13, P14 are configured so as to be equal to each other, and the pulse duties of the pulse currents P15, P16 are configured so as to be equal to each other. This allows the green light section 21 in the second display 20 to be turned on by the pulse currents P13, P14 having the same current with the pulse current P11, and allows the green light section 22 in the second display 20 to be turned on by the pulse currents P15, P16 having the same amount of the current with the pulse current P12. Thus, the second display 20 can emit light of the same brilliance with the case of the first switching control.

The display device 1, as shown in Fig. 4, includes the first display 10 and the second display 20. The first display 10 and the second display 20 include the first LCD panel 16 and the second LCD panel 26, respectively. The first LCD panel 16 includes the red light sections 11, 12 and the green light sections 13, 14. The second LCD panel 26 includes the green light sections 21, 22. With this, in the display device 1, such display light sources for every segment associated with a display device having seven-segment displays are unnecessary. Therefore, power consumption (supplied current) can be reduced, and furthermore, by reducing the number of display light sources, increase of number of parts can be prevented.

Furthermore, since the number of the display light sources in the display device 1 can be less than those in the display device having seven-segment displays, complication in electric wiring to the red light sections 11, 12 and the green light sections 13, 14 in the first display 10 and the green light sections 21, 22 in the second display 20 can be prevented.

Furthermore, in the pressure sensor 50 in accordance with the present embodiment, the CPU 30 executes the green LED chip turning on processing (S12) and the red LED chip turning on processing (S13) . By the processing, in the case where the measured pressure value is smaller than the reference pressure value, the measured pressure value is presented in the first display 10 with the green light; and in the case where the measure pressure value is larger than the reference pressure value, the measured pressure value is presented in the first display 10 with the red light. An operator and the like can know from the presented color (green or red) in the first display 10 whether or not the measured pressure value is larger than the reference pressure value.

In the case of the setting mode, the CPU 30 of the pressure sensor 50 controls so that the displaying contents (the numeric character "0") is presented with the yellow light and, in the case of the measuring mode, the CPU executes the green LED chip turning on processing (S12) and the red LED chip turning on processing (S13), thereby controlling so that the measured pressure value is presented in the first display 10 with the green or red light. This allows the pressure sensor 50 to indicate with the presenting color (yellow, or green, red) in the first display 10 that it is in the setting mode or in the measuring mode.

### Second Embodiment

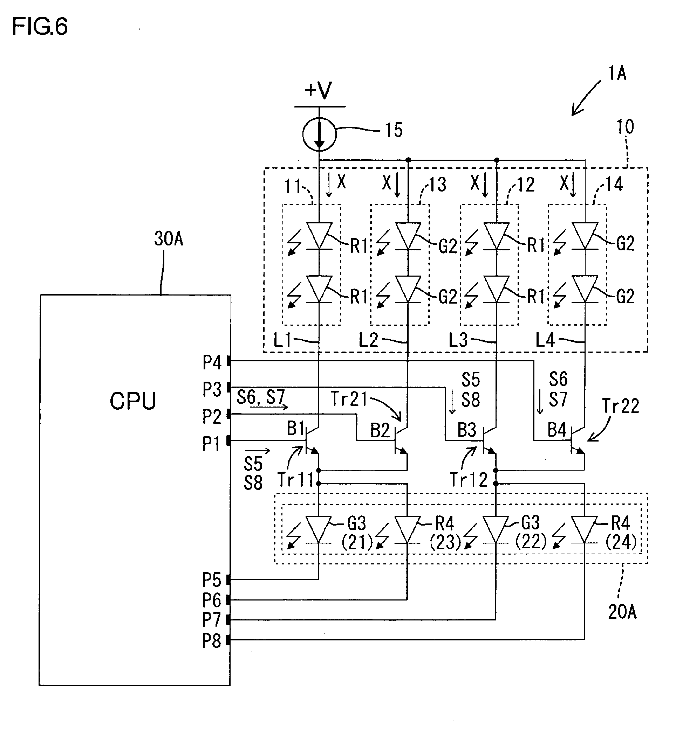

A display device 1A in accordance with a second embodiment will be described with reference to Fig. 6. In this embodiment, construction similar to the display device 1 in accordance with the first embodiment are designated by the same numerals, while the explanations are omitted.

### 1. Construction of the display device

Fig. 6 shows an electric construction of the display device 1A in accordance with a second embodiment. A second display 20A in the display device 1A includes a green LED chip G3 constituting the first green light section 21, a green LED chip G3 constituting the second green light section 22, a red LED chip R4 constituting a first red light section 23, and a red LED chip R4 constituting a second red light section 24. The first green light section 21 and the first red light section 23 are connected in parallel to the first current path L1 at the downstream of the common-emitter connection of the transistors Tr11, Tr21 in the current flow direction X. The second green light section 22 and the second red light section 24 are connected in parallel to the third current path L3 at the downstream of the common-emitter connection of the transistors Tr12, Tr22 in the current flow direction X. The light sections 21-24 each are, as shown in the figure, further connected in series at the downstream thereof in the current flow direction (the direction X) to the respective input ports P5-P8 of a CPU 30A. Note that the first and second green light sections 21, 22, the first and second red light sections 23, 24, the input ports P5, P7, and the input ports P6, P8 correspond to a third display light source, a fourth display light source, a third switch, and a fourth switch, respectively.

### 2. Operation of the Display Device

In the display device 1A, in the case of turning on the green light sections 21, 22 in the second display 20A, the CPU 30A outputs port opening signals to the input ports P5, P7 and port closing signals to the input ports P6, P8, thereby opening the input ports P5, P7 while closing the input ports P6, P8.

Next, the CPU 30A outputs the actuating signals S5 of Level H to the bases B1, B3 of the transistors Tr11, Tr12 each connected to the respective ports P1, P3. The actuating signals S5 of Level H are input to the bases B1, B3, thereby turning the transistors Tr11, Tr12 to the ON state. When the transistors Tr11, Tr12 each connected in series to the respective first and the third current paths L1, L3 are turned to the ON state, current flows in the direction X through the constant current source 15, the red light sections 11, 12, the transistor Tr11, Tr12, and the green light sections 21, 22 toward the input ports P5, P7. Thus, the green light sections 21, 22 in the second display 20A and the red light sections 11, 12 in the first display 10 are turned on. Note that the green light sections 21, 22 in the second display 20A can be turned on also by turning the transistors Tr21, Tr22 each connected in series to the respective second and fourth current paths L2, L4 to the ON state while opening the input ports P5, P7, thereby passing current through the current paths L1, L3 connected in parallel to the respective current paths L2, L4.

On the other hand, in the case of turning on the red light sections 23, 24 in the second display 20A of the display device 1A, the CPU 30A outputs the port opening signals to the input ports P6, P8 and the port closing signals to the input ports P5, P7, thereby opening the input ports P6, P8 while closing the input ports P5, P7.

Next, the CPU 30A outputs the actuating signals S7 of Level H to the bases B2, B4 of the transistor Tr21, Tr22 connected to the output ports P2, P4. The actuating signals S7 of Level H are input to the bases B2, B4, thereby turning the transistors Tr21, Tr22 to the ON state. When the transistors Tr21, Tr22 each connected in series to the respective second and fourth current paths L2, L4 are turned to the ON state, current flows in direction X through the constant current source 15, the green light sections 13, 14, and the red light sections 23, 24 connected in parallel with the first and third current paths L1, L3 toward the input ports P6, P8. Thus, the red light sections 23,24 in the second display 20A and the green light sections 13, 14 in the first display 10 are turned on. Note that the red light sections 23, 24 in the second display 20A can be turned on also by turning the transistors Tr11, Tr12 each connected in series to the respective current paths L1, L3 to the ON state while opening the input ports P6, P8, thereby passing current through the first and third current paths L1, L3.

Furthermore, in the case of turning on the green light sections 21, 22 and the red light sections 23, 24 in the second display 20A of the display device 1A, the CPU 30A outputs the port opening signals to the input ports P5-P8, thereby opening the input ports P5-P8.

After that, the CPU 30A outputs the actuating signals S5 of Level H to the bases B1, B3 of the transistors Tr11, Tr12 each connected to the respective output ports P1, P3, thereby turning the transistors Tr11, Tr12 to the ON state. When the transistors Tr11, Tr12 each connected to the respective first and third current paths L1, L3 are turned to the ON state, current flows through the green light section 21 connected in series to the first current path L1, the red light section 23 connected in parallel with the current path L1, the green light section 22 connected in series to the third current path L3, and the red light section 24 connected in parallel with the current path L3. The green light sections 21, 22 and the red light sections 23, 24 are thus turned on. Note that the green light sections 21, 22 and the red light sections 23, 24 can be turned on also by turning the transistors Tr21, Tr22 each connected to the respective second and fourth current paths L2, L4 to the ON state while opening the input ports P5-P8, thereby passing current through the current paths L1, L3 and the red light sections 23,24 each connected in parallel with the respective current paths L1, L3.

### 3. Operation of a Pressure Sensor

A pressure sensor 50A having the display device 1A is different from the pressure sensor 50 of the first embodiment only in that the second display 20A includes, in addition to the first and second green light sections 21, 22, the first and second red light sections 23, 24. The explanations of the construction of the pressure sensor 50A are therefore omitted. The pressure sensor 50A, in the setting mode, outputs the control signals S1, S2 (as shown in Fig. 5) to the first and second LCD panel 16, 26, respectively.

The CPU 30A of the pressure sensor 50A, in the setting mode, simultaneously with outputting the control signals S1, S2, outputs the actuating signals S5 of Level H (as shown in Fig. 6) from the output ports P1, P3 to the bases B1, B3 of the transistors Tr11, Tr12 each connected in series to the respective first and third current paths L1, L3 and the actuating signals S6 of Level L (as shown in Fig. 6) from the output ports P2, P4 to the bases B2, B4 of the transistors Tr21, Tr22 each connected in series to the respective second and fourth current paths L2, L4. The CPU 30A, while outputting the actuating signals S5, S6, outputs the port opening signals to the input ports P5-P8, thereby opening the input ports P5-P8.

The actuating signals of Level H are input to the bases B1, B3, thereby turning the transistors Tr11, Tr12 to the ON state. When the transistors Tr11, Tr12 are turned to the ON state, current flows through the first and third current paths L1, L3. Thus, the green light sections 21, 22 and the red light section 23, 24 in the second display 20 are turned on. At the same time, the actuating signals S6 of Level L are input to the bases B2, B4, thereby turning the transistors Tr21, Tr22 to the OFF state.

The green light sections 21, 22 and the red light sections 23, 24 illuminates the second LCD panel 26 from the backside, and thus the second display 20A presents the displaying contents (the reference pressure value in this case) with yellow light. Note that, in the first display 10, the first LCD panel 16 receives the control signal S1, while current flows through the first and third current paths L1, L3, and the red light sections 11, 13 are turned on and thereby illuminating the first LCD panel 16 from the backside, and thus the displaying contents (the numeric character "0") is presented with the red light.

On the other hand, in the measuring mode, in the green LED chip turning on processing (S12), the CPU 30A of the pressure sensor 50A, simultaneously with outputting the control signals S1, S2, outputs the actuating signals S7 of Level H (as shown in Fig. 6) from the output ports P2, P4 to the bases B2, B4 of the transistors Tr21, Tr22 each connected in series to the respective second and fourth current paths L2, L4, and the actuating signals S8 of Level L (as shown in Fig. 6) from the output ports P1, P3 to the bases B1, B3 of the transistors Tr11, Tr12 each connected in series to the respective first and third current paths L1, L3. The CPU 30A, while outputting the actuating signals S7, S8, outputs the port opening signals to the input ports P5, P7 and the port closing signals to the input ports P6, P8, thereby opening the input ports P5, P7 while closing the input ports P6, P8.

The actuating signals S7 of Level H are input to the bases B2, B4, thereby turning the transistors Tr21, Tr22 to the ON state, and current flows through the first and fourth current paths L2, L4 and then toward the input ports P5, P7. Thus, the green light sections 13, 14 in the first display 10 are turned on. The actuating signals of Level L are input to the bases B1, B3, thereby turning the transistor Tr11, Tr12 to the OFF state. Thus, the red light sections 11, 12 in the first display 10 are turned off.

By the green LED chip turning on processing (S12), the green light sections 13, 14 in the first display 10 illuminate the first LCD panel 16 from the backward, and thus the first display 10 presents the displaying contents (the measured pressure value in this case) in the green light. Note that, the second display 20A receives the control signal S2, while current flows through the second and fourth current paths L2, L4 and then toward the input ports P5, P7, and the green light sections 21, 22 are turned on, thereby illuminating the second LCD panel 26 from the backside. Thus, the second display 20A presents the displaying contents (the characters "RUN" in this case) in the green light.

In the red LED chip turning on processing (S13), the CPU 30A of the pressure sensor 50A, simultaneously with outputting the control signals S1, S2, outputs the actuating signals S5 of Level H (as shown in Fig. 6) from the output ports P1, P3 to the bases B1, B3 of the transistors Tr11, Tr12 each connected in series to the respective first and third current paths L1, L3 and the actuating signals S6 of Level L from the output ports P2, P4 to the bases B2, B4 of the transistors Tr21, Tr22 each connected in series to the respective second and fourth current paths L2, L4. The CPU 30A, while outputting the actuating signals S5, S6, outputs the port opening signals to the input ports P6, P8 and the port closing signals to the input ports P5, P7, thereby opening the input ports P6, P8 while closing the input ports P5, P7.

The actuating signals S5 of Level H are input to the bases B1, B3, thereby turning the transistor Tr11, Tr12 to the ON state, and current flows through the first and third current paths L1, L3, and then toward the input ports P6, P8. Thus, the red light sections 11, 12 in the first display 10 are turned on. The actuating signals S6 of Level L are input to the bases B2, B4, thereby turning the transistors Tr21, Tr22 to the OFF state. Thus, the green light sections 13, 14 in the first display 10 are turned off.

By the red LED chip turning on processing (S13), the red light sections 11, 12 in the first display 10 illuminate the first LCD panel 16 from the backside, and thus the first display 10 presents the displaying contents (the measured pressure value in this case) with the red light. Note that, in the second display 20A, the second LCD panel 21 receives the control signal S2, while current flows through the first and third current paths L1, L3 and then toward the input ports P6, P8, and the red light sections 23, 24 are turned on, thereby illuminating the second LCD panel 26 from the backside. Thus, the second display 20A presents the displaying contents (the characters "RUN" in this case) with the red light.

### 4. Effects of the Second Embodiment

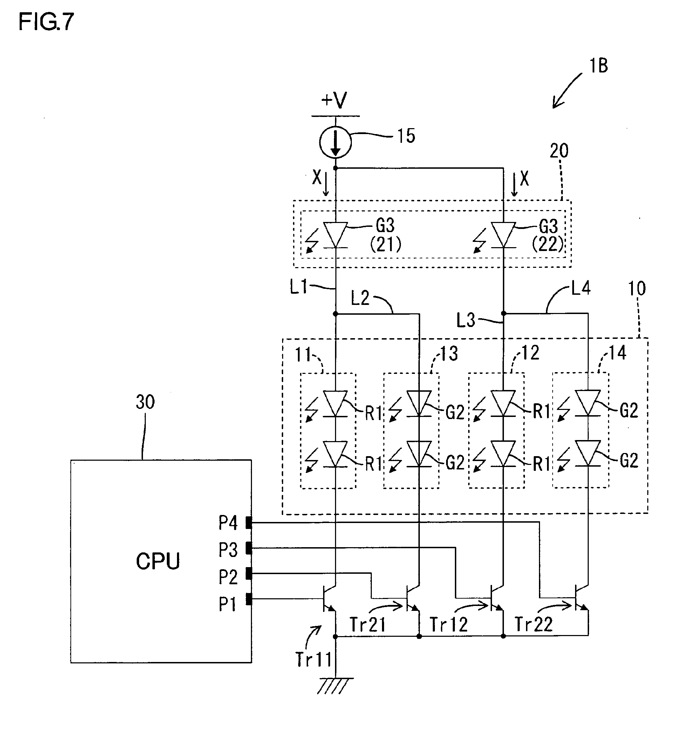

In the display device 1A in accordance with the present embodiment, as shown in Fig. 7, the input ports P5, P7 each are connected in series to the respective green light sections 21, 23 in the second display 20A, and the input ports P6, P8 each are connected in series to the respective red light sections 23, 24 in the display 20A, and the input ports P5, P7, P6, P8 are connected in parallel. With this, all input ports P5-P8 can be turned to the opened state by the port opening signals, and the second display 20A can emit light with the color (yellow) produced by simultaneously turning on the green light sections 21, 22 and the red light sections 23, 24 and combining them.

In the pressure sensor 50A in accordance with the present embodiment, the second display 20A presents the reference pressure value in yellow in the setting mode, and the characters "RUN" in green or red in the measuring mode. Therefore, the pressure sensor 50A can indicate with the presented color (yellow, or green, red) that it is in the detection mode or in the setting mode.

### Other embodiments

Further various variations other than the foregoing embodiments are also possible within the scope and spirit of the invention.

(1) For example, as shown in Fig. 7, in the display device 1B, the second light sections having the green light sections 21, 22 may be connected in series to the first current path L1 and the third current path L3 at the upstream of the first display 10 having the red light sections 11, 12 and the green light sections 13, 14, and the red light sections 11, 12 each are connected in series to the respective transistors Tr11, Tr12 and the green light sections 13, 14 each are connected in series to the respective transistors Tr21,22, and the transistors Tr11, Tr21 and the transistors Tr12, Tr22 are connected to the current paths L1, L3, respectively. With the display device 1B, the green light sections 21, 22 in the second display 20 can be supplied with power through the first and third current paths and, therefore, for providing power to green light sections 21, 22 in the second display, any current path other than the current paths for providing power to the light sections in the first display 10 is unnecessary. Accordingly, the display device 1B can be provided with a plurality of displays (the first display 10, the second display 20) without supplying current to additional current paths and therefore and without increasing power consumption.

(2) The first display 10 of the display device 1 is provided with two light sections, i.e. the red light sections 11, 12 and the green light sections 13, 14. However, the first display 10 may be provided with three or more light sections.

(3) In the display device 1, 1A, the transistors Tr11, Tr12 and the transistors tr21, tr22 are provided at the upstream of the green light sections 21, 22 in the second display 20 in the current flow direction (the direction X), however, they may be provided in the downstream of the green light sections 21, 22 in the current flow direction (the direction X).

(4) The display device 1 in accordance with the first embodiment may exclude the constant current source 15 while connecting the first and second green light sections 21, 22 in parallel and grounding them via a resistor.

(5) In the display device 1, in order to make the first display 10 emit light in yellow, the CPU 30 operates so that the pulse duties of the pulse currents P13, P14 be equal to each other and the pulse duty of the pulse currents P15, P16 be equal to each other. However, the pulse duties of the pulse currents P13, P14 and the pulse duties of the pulse currents P15, P16 each can be changed depending on the color of the light to emit from the first display 10 so that the sum of the pulse current P13 and the pulse current P14 be equal to the amount of the current of the pulse current P11 of the case of the first switching control, and the sum of the pulse current P15 and the pulse current P16 be equal to the amount of the current of the pulse current P12 of the case of the first switching control, respectively.

(6) In the display device 1, the second switching control may be arranged so that, similar to the case of the first switching control, the pulse currents that flow through the first and second light sections 13, 14 each connected in series to the respective second and fourth current paths L2, L4 flow through the first and second green light sections 21, 22 in the second display 20 that are connected in parallel to the current paths L2, L4 at the downstream in the current flow direction (the direction X).

The pressure sensor 50, 50A can be changed over by the change-over switch 82 from the setting mode to the measuring mode, and vice versa, however, the pressure sensor 50, 50A may exclude the change-over switch 82 while being always set at the measuring mode.

## Claims

1. A display device having a first display for displaying a first information and a second display for displaying a second information, the second information being different from the first information, the display device comprising:
a first display light source and a second display light source, both of the first display light source and the second display light source being provided in the first display, wherein the first display light source and the second display light source are connected in parallel with each other, and wherein each of the first display light source and the second display light source has a wavelength different from each other;
a switch controller for switching a first switch and a second switch, the first switch being for driving the first display light source and a second switch being for driving the second display light source, wherein the first switch is connected in series to the first display light source and the second switch is connected in series to the second display light source, and wherein the first switch and the second switch are connected in parallel; and
a display light source for the second display provided in the second display, wherein the display light source for the second display is connected in series to a current path connected to the first switch and the second switch.

2. The display device according to claim 1, wherein the switch controller selectively executes a first switch control, a second switch control, and a third switch control, the first switch control being for switching the first switch thereby pulse lighting the first display light source, the second switch control being for switching the second switch thereby pulse lighting the second display light source, and the third switch control being for switching the first and second switches thereby pulse lighting the first and second display light sources,
and wherein the switch controller changes pulse duties of the first and second display light sources such that a sum of the currents flowing through the display light source for the second display be constant in a case of executing the third switch control.

3. The display device according to any one of claims 1 and 2, wherein the first display includes a liquid crystal panel having the first and second display light sources on the backside opposite from the display side thereof, and wherein the second display includes a liquid crystal panel having the display light source for the second display on the backside opposite from the display side thereof.

4. The display device according to any one of claims 1 to 3, wherein the display light source for the second display includes a third display light source and a fourth display light source, each of the third display light source and the fourth display light source having a different wavelength from each other, wherein a third switch is connected in series to the third display light source and a fourth switch is connected in series to the fourth display light source, and wherein the third switch and the fourth switch are connected in parallel.

5. A detection sensor having the display device according to any one of claims 1 to 4, the detection sensor being for detecting a condition of a detecting object and displaying the condition in the first display, comprising:
a detector for outputting a detection signal corresponding to the detected condition of the detecting object;
a setting means for setting a threshold value to be compared with the value of the detection signal;
a determining means for comparing the value of the detection signal with the threshold value, thereby determining the condition of the detecting object; and
a display controller for controlling so as to turn on the first or second display light source, thereby displaying the value of the detection signal in the first display in a color, the color in a case where the value of the detection signal exceeds the threshold value being different from the color in the case where the value of the detection signal does not exceed the threshold value.
